# EUROPEAN PATENT APPLICATION

(11) **EP 4 621 370 A1**
(43) Date of publication of application: **24.09.2025**
(21) Application number: 23891070.7
(22) Date of filing: 26.05.2023
(51) Int. Cl.: G01L 5/1623

(54) **ESTIMATION DEVICE, ESTIMATION METHOD, PROGRAM, AND LEARNING DEVICE**

(30) Priority: 18.11.2022 JP 2022185257
(71) Applicant: BRIDGESTONE CORPORATION, Chuo-ku Tokyo 104-8340 (JP)
(72) Inventor: SAKURAI, Ryo, Tokyo 104-8340 (JP); WAKAO, Yasumichi, Tokyo 104-8340 (JP)
(74) Representative: Marks & Clerk LLP
(86) International application number: PCT/JP2023/019819
(87) International publication number: WO 2024/105908

(57) **Abstract**

An estimating device has an estimating section estimating a physical quantity relating to a subject tire that is a subject of estimation by inputting an electrical characteristic obtained from the subject tire to a trained model, which has been trained by using the electrical characteristic of an electrically-conductive rubber provided at a tire and the physical quantity relating to the tire as training data and such that the electrical characteristic is inputted to the trained model and the trained model outputs the physical quantity.

## Description

### Technical Field

The technique of the present disclosure relates to an estimating device, an estimating method, a program and a training device.

### Background Art

International Publication No. 2021/124992 discloses an estimating device that can estimate deformation of a member without directly measuring the deformation. The estimating device includes an estimating section that estimates a target physical quantity corresponding to a subject of estimation by inputting two physical quantities of the target of estimation, which correspond to at least two physical quantities other than the target physical quantity, to a trained model that has been trained by using, as training data, a plurality of at least three different types of physical quantities that vary in accordance with deformation of a member that deforms linearly or non-linearly and that include the target physical quantity with which time-series information is associated, such that at least two physical quantities other than the target physical quantity are the inputs of the trained model and the trained model outputs the target physical quantity.

Japanese Patent Application Laid-Open (JP-A) No. 2006-208052 discloses a strain sensor for a rubber product that can measure strain of a rubber product, starting with a tire, over a broad range up to an extent of several hundred percent. The strain sensor for a rubber product is formed from a rubber composition for strain detection that contains electrically-conductive particles and that can detect strain by measuring changes in electrical resistance brought about by strain that is generated accompanying an external load.

### SUMMARY OF INVENTION

### Technical Problem

A structure that estimates a physical quantity relating to a tire is not disclosed in either International Publication No. 2021/124992 or JP-A No. 2006-208052.

The technique of the present disclosure was made in view of the above-described topic, and, as an example, an object thereof is to provide an estimating device, an estimating method, a program and a training device that can estimate a physical quantity relating to a tire even if the physical quantity relating to the tire is not measured directly.

### Solution to Problem

A first aspect of the technique of the present disclosure is an estimating device having an estimating section estimating a physical quantity relating to a subject tire that is a subject of estimation by inputting an electrical characteristic obtained from the subject tire to a trained model, which has been trained by using the electrical characteristic of an electrically-conductive rubber provided at a tire and the physical quantity relating to the tire as training data and such that the electrical characteristic is inputted to the trained model and the trained model outputs the physical quantity.

A second aspect of the technique of the present disclosure is an estimating device in which, in the estimating device relating to the first aspect, the electrical characteristic includes electrical resistance of the electrically-conductive rubber.

A third aspect of the technique of the present disclosure is an estimating device in which, in the estimating device relating to the first aspect or the second aspect, the physical quantity is a physical quantity relating to traveling of the tire.

A fourth aspect of the technique of the present disclosure is an estimating device in which, in the estimating device relating to any one of the first aspect through the third aspect, the physical quantity includes a slip angle of the tire.

A fifth aspect of the technique of the present disclosure is an estimating device in which, in the estimating device relating to any one of the first aspect through the fourth aspect, the physical quantity includes a camber angle of the tire.

A sixth aspect of the technique of the present disclosure is an estimating device in which, in the estimating device relating to any one of the first aspect through the fifth aspect, the physical quantity includes load applied to the tire.

A seventh aspect of the technique of the present disclosure is an estimating device in which, in the estimating device relating to any one of the first aspect through the sixth aspect, the physical quantity includes lateral force applied to the tire.

An eighth aspect of the technique of the present disclosure is an estimating device in which, in the estimating device relating to any one of the first aspect through the seventh aspect, the electrically-conductive rubber has a contacting portion provided at a position contacting a rim.

A ninth aspect of the technique of the present disclosure is an estimating device in which, in the estimating device relating to the eighth aspect, the contacting portion is provided at a bead portion.

A tenth aspect of the technique of the present disclosure is an estimating device in which, in the estimating device relating to the eighth aspect or the ninth aspect, the rim has an electrically-conductive portion that contacts the contacting portion.

An eleventh aspect of the technique of the present disclosure is an estimating device in which, in the estimating device relating to the tenth aspect, the electrically-conductive portion is provided at a bead seat portion.

A twelfth aspect of the technique of the present disclosure is an estimating method including estimating a physical quantity relating to a subject tire that is a subject of estimation by inputting an electrical characteristic obtained from the subject tire to a trained model, which has been trained by using the electrical characteristic of an electrically-conductive rubber provided at a tire and the physical quantity relating to the tire as training data and such that the electrical characteristic is inputted to the trained model and the trained model outputs the physical quantity.

A thirteenth aspect of the technique of the present disclosure is a program for causing a computer to execute a processing including estimating a physical quantity relating to a subject tire that is a subject of estimation by inputting an electrical characteristic obtained from the subject tire to a trained model, which has been trained by using the electrical characteristic of an electrically-conductive rubber provided at a tire and the physical quantity relating to the tire as training data and such that the electrical characteristic is inputted to the trained model and the trained model outputs the physical quantity.

A fourteenth aspect of the technique of the present disclosure is a training device having a training section that generates a trained model, which is trained by using an electrical characteristic of an electrically-conductive rubber provided at a tire and a physical quantity relating to the tire as training data and such that the electrical characteristic is inputted to the trained model and the trained model outputs the physical quantity.

### Advantageous Effects of Invention

**In** accordance with the technique of the present disclosure, as an example, a physical quantity relating to a tire can be estimated even if the physical quantity relating to the tire is not measured directly.

### BRIEF DESCRIPTION OF DRAWINGS

Fig. 1 is a perspective view schematically illustrating a tire/rim assembly relating to a present embodiment.
Fig. 2 is a cross-sectional view illustrating a half portion from the equatorial plane of the tire/rim assembly relating to the present embodiment.
Fig. 3 is a block drawing illustrating an estimating system relating to the present embodiment.
Fig. 4 is a block drawing illustrating functional structures of an estimating device relating to the present embodiment.
Fig. 5 is a flowchart illustrating the flow of estimating processing relating to the present embodiment.
Fig. 6 is a block drawing illustrating functional structures of a training device relating to the present embodiment.
Fig. 7 is an explanatory drawing illustrating a mode of training processing relating to the present embodiment.
Fig. 8 is a flowchart illustrating the flow of training processing relating to the present embodiment.
Fig. 9 is a block drawing illustrating hardware structures of the estimating device relating to the present embodiment.
Fig. 10 is a perspective view illustrating a first modified example relating to a strain detecting body relating to the present embodiment.
Fig. 11 is a perspective view illustrating a second modified example relating to the strain detecting body relating to the present embodiment.
Fig. 12 is a perspective view illustrating a third modified example relating to the strain detecting body relating to the present embodiment.
Fig. 13 is a perspective view illustrating a fourth modified example relating to the strain detecting body relating to the present embodiment.
Fig. 14 is a perspective view illustrating a fifth modified example relating to the strain detecting body relating to the present embodiment.
Fig. 15 is a perspective view illustrating a sixth modified example relating to the strain detecting body relating to the present embodiment.
Fig. 16 is a perspective view illustrating a seventh modified example relating to the tire/rim assembly relating to the present embodiment.
Fig. 17 is a perspective view illustrating an eighth modified example relating to the tire/rim assembly relating to the present embodiment.
Fig. 18 is a perspective view illustrating a ninth modified example relating to the tire/rim assembly relating to the present embodiment.
Fig. 19 is a graph illustrating results of estimation relating to an Example.
Fig. 20 is a cross-sectional view illustrating an example in which RF tags are provided at a tire relating to the present embodiment.

### DESCRIPTION OF EMBODIMENTS

An embodiment of the technique of the present disclosure is described hereinafter with reference to the drawings.

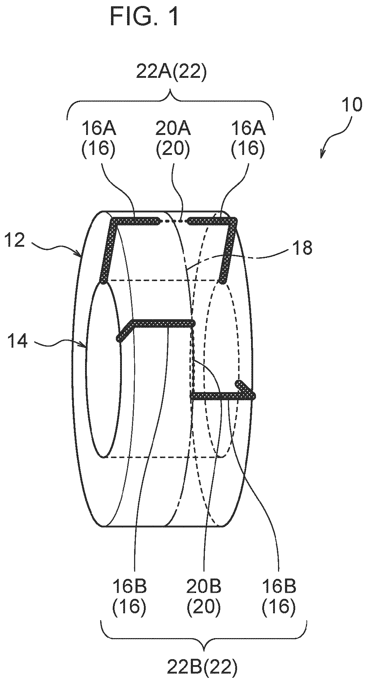

A tire/rim assembly 10 relating to the present embodiment is illustrated schematically in Fig. 1. The tire/rim assembly 10 has a tire 12 and a rim 14. The tire 12 is mounted to the rim 14. The tire 12 may be the tire of any type of vehicle.

The tire 12 has plural first electrically-conductive rubbers 16A and plural second electrically-conductive rubbers 16B. The number of the plural first electrically-conductive rubbers 16A may be any number. Similarly, the number of the plural second electrically-conductive rubbers 16B may be any number. In the example illustrated in Fig. 1, a pair of the first electrically-conductive rubbers 16A are used as the plural first electrically-conductive rubbers 16A, and a pair of the second electrically-conductive rubbers 16B are used as the plural second electrically-conductive rubbers 16B.

The first electrically-conductive rubbers 16A and the second electrically-conductive rubbers 16B both are electrically conductive due to their containing electrically-conductive particles. The rubber compositions for strain detection described in JP-A No. 2006-208052 for example can be used as the first electrically-conductive rubbers 16A and the second electrically-conductive rubbers 16B.

The pair of first electrically-conductive rubbers 16A are disposed so as to be apart from one another in the axial direction of the tire 12, with an equatorial plane 18 of the tire 12 disposed therebetween. A first connecting member 20A extending in the axial direction of the tire 12 is provided between the pair of first electrically-conductive rubbers 16A, and the first connecting member 20A electrically connects the equatorial plane 18 side end portions of the pair of first electrically-conductive rubbers 16A. The first connecting member 20A may be a wire, or may be an electrically-conductive rubber.

The pair of second electrically-conductive rubbers 16B are disposed so as to be apart from one another in the axial direction of the tire 12 with the equatorial plane 18 of the tire 12 disposed therebetween, and are disposed so as to be apart from one another in the circumferential direction of the tire 12 as well. A second connecting member 20B extending in the circumferential direction of the tire 12 is provided between the pair of second electrically-conductive rubbers 16B, and the second connecting member 20B electrically connects the equatorial plane 18 side end portions of the pair of second electrically-conductive rubbers 16B. The second connecting member 20B may be a wire, or may be an electrically-conductive rubber.

A first strain detecting body 22A that detects strain of the tire 12 is formed by the pair of first electrically-conductive rubbers 16A and the first connecting member 20A. Similarly, a second strain detecting body 22B that detects strain of the tire 12 is formed by the pair of second electrically-conductive rubbers 16B and the second connecting member 20B.

Hereinafter, in cases in which there is no need to differentiate between the first electrically-conductive rubbers 16A and the second electrically-conductive rubbers 16B, the first electrically-conductive rubbers 16A and the second electrically-conductive rubbers 16B are called "electrically-conductive rubbers 16". Further, in cases in which there is no need to differentiate between the first connecting member 20A and the second connecting member 20B, the first connecting member 20A and the second connecting member 20B are called "connecting members 20". Further, in cases in which there is no need to differentiate between the first strain detecting body 22A and the second strain detecting body 22B, the first strain detecting body 22A and the second strain detecting body 22B are called "strain detecting bodies 22".

In the example illustrated in Fig. 1, two of the strain detecting bodies 22 are provided at the tire 12, but the number of strain detecting bodies 22 that the tire 12 has may be any number. Further, the strain detecting body 22 has the connecting member 20, but does not have to have the connecting member 20. Moreover, the strain detecting body 22 may be structured by only the electrically-conductive rubber 16, or may have, in addition to the electrically-conductive rubber 16, members other than the electrically-conductive rubber 16 and the connecting member 20. Further, the number of the electrically-conductive rubbers 16 that the strain detecting body 22 has may be any number.

When the strain of the electrically-conductive rubber 16 changes in accordance with the state of the tire 12 that is traveling, the electrical characteristics of the electrically-conductive rubber 16 change. For example, the electrical resistance of the electrically-conductive rubber 16 is included as an electrical characteristic of the electrically-conductive rubber 16. The strain of the tire 12 can be detected by estimating an electrical characteristic of the strain detecting body 22 that includes the electrically-conductive rubbers 16.

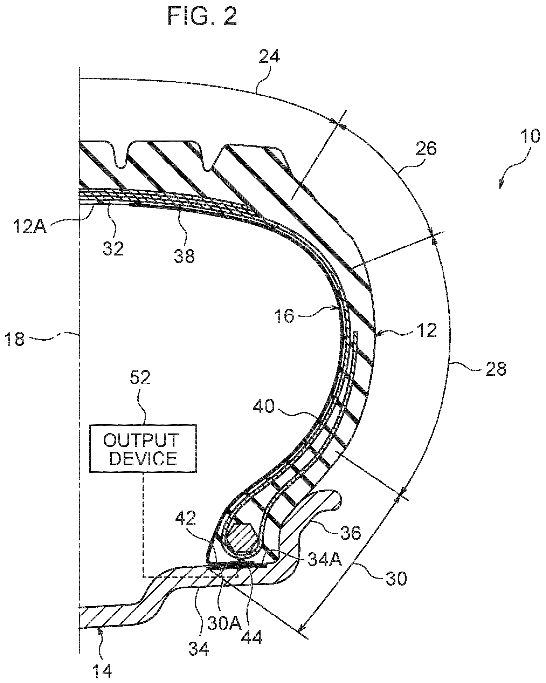

A half portion from the equatorial plane 18 of the tire/rim assembly 10 relating to the present embodiment is illustrated in Fig. 2. The tire 12 has plural structural portions. Specifically, the tire 12 has a tread portion 24, shoulder portions 26, side portions 28 and bead portions 30 as an example of the plural structural portions thereof.

An inner liner 32 is provided at an inner surface 12A of the tire 12. The inner liner 32 is provided at the respective inner surfaces of the tread portion 24, the shoulder portions 26, the side portions 28 and the bead portions 30, which serve as an example of the inner surface 12A of the tire 12. The inner liner 32 is provided in an annular form in the circumferential direction of the tire 12.

The rim 14 has bead seat portions 34 and flange portions 36. The bead portions 30 are assembled to the bead seat portions 34. The flange portions 36 are continuous with the bead seat portions 34 and are positioned at the outer sides of the bead portions 30.

The electrically-conductive rubber 16 illustrated in Fig. 2 corresponds respectively to the above-described pair of first electrically-conductive rubbers 16A and pair of second electrically-conductive rubbers 16B (refer to Fig. 1 for both). The electrically-conductive rubbers 16 are provided to span over the tread portion 24, the shoulder portions 26, the side portions 28 and the bead portions 30.

As an example, the electrically-conductive rubber 16 has an axial direction portion 38, a radial direction portion 40 and a contacting portion 42. The axial direction portion 38 and the radial direction portion 40 are one portion of the electrically-conductive rubber 16, and the contacting portion 42 is another portion of the electrically-conductive rubber 16. The axial direction portion 38 is the portion that extends in the axial direction of the tire 12, and is provided at the tread portion 24. The radial direction portion 40 is the portion extending in the radial direction of the tire 12, and is provided so as to span over the shoulder portion 26, the side portion 28 and the bead portion 30.

As an example, the electrically-conductive rubber 16 is formed in the shape of a sheet. Due to the electrically-conductive rubber 16 being formed in the shape of a sheet, the axial direction portion 38 extends in the axial direction and the circumferential direction of the tire 12, and the radial direction portion 40 extends in the radial direction and the circumferential direction of the tire 12.

The axial direction portion 38 and the radial direction portion 40 are provided at the inner surface 12A of the tire 12 as an example. Specifically, the axial direction portion 38 and the radial direction portion 40 are provided at the inner liner 32 that serves as an example of the inner surface 12A of the tire 12. The electrically-conductive rubber 16 may structure at least a portion of the inner liner 32, or may be a separate member that is independent from the inner liner 32.

Further, the electrically-conductive rubber 16 may be formed in a shape flush with the inner liner 32, or may be superposed with at least one of the obverse and the reverse surface of the inner liner 32. Further, the tire 12 may be manufactured by being vulcanized in a state in which the electrically-conductive rubbers 16 are affixed to the inner liner 32 of a green tire.

The contacting portion 42 is provided at a position contacting the rim 14. Specifically, the contacting portion 42 is provided at the bead portion 30, which serves as an example of a position contacting the rim 14. Even more specifically, the contacting portion 42 is provided at, of the bead portion 30, a facing surface 30A that faces the bead seat portion 34. The contacting portion 42 extends from the radial direction portion 40 along the facing surface 30A, from the inner side toward the outer side of the tire 12.

The rim 14 has plural electrically-conductive portions 44. Although one electrically-conductive portion 44 among the plural electrically-conductive portions 44 is illustrated in Fig. 2, the electrically-conductive portions 44 are provided respectively at positions corresponding to the respective electrically-conductive rubbers 16. As an example, the electrically-conductive portion 44 is provided at a portion, in the circumferential direction, of the rim 14.

The electrically-conductive portion 44 is electrically conductive. The electrically-conductive portion 44 may be formed by a region where the surface of the rim 14 is exposed from a portion of a film that covers the surface of the electrically-conductive rim 14 (i.e., a region that is a portion of the surface of the rim 14). Further, the electrically-conductive portion 44 may be a member provided at a region where the surface of the rim 14 is exposed (i.e., a member separate from the rim 14). Further, in a case in which the electrically-conductive portion 44 is formed by a member separate from the rim 14, the electrically-conductive portion 44 may be made of metal or may be made of resin. Further, the electrically-conductive portion 44 may be sheet-shaped.

The electrically-conductive portion 44 is provided at a position contacting the contacting portion 42. Specifically, the electrically-conductive portion 44 is provided at the bead seat portion 34, which serves as an example of a position contacting the contacting portion 42. More specifically, the electrically-conductive portion 44 is provided at a facing surface 34A, which faces the bead portion 30, of the bead seat portion 34. Due to the electrically-conductive portion 44 being provided at the facing surface 34A, the electrically-conductive portion 44 contacts the contacting portion 42 in a state of being fit tightly thereto.

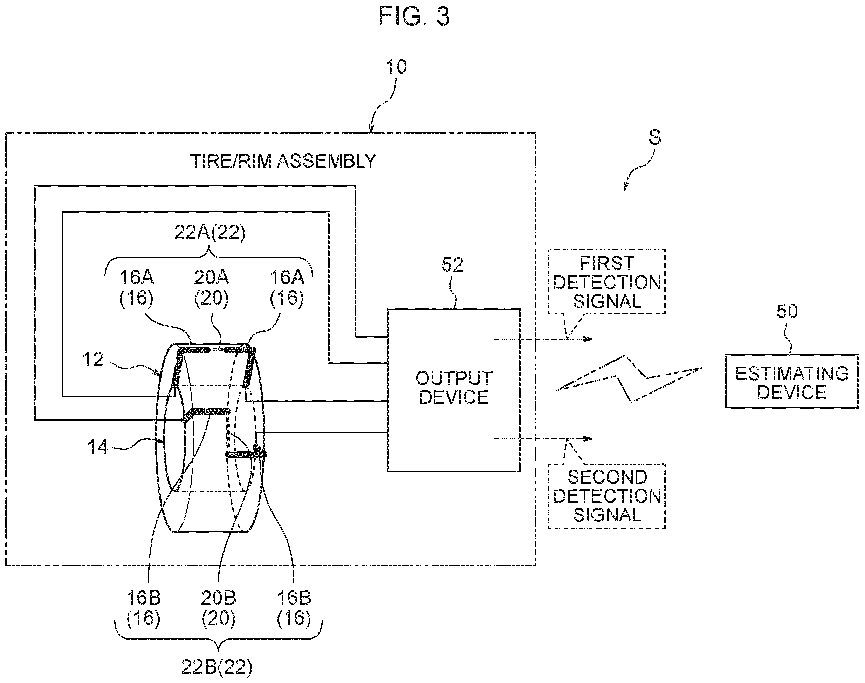

Estimating system S relating to the present embodiment is illustrated in Fig. 3. The estimating system S is a system that estimates a physical quantity relating to the tire 12 that is in the midst of traveling, on the basis of electrical characteristics of the plural strain detecting bodies 22. The estimating system S has the tire/rim assembly 10 and an estimating device 50. The estimating system S may be applied to any type of vehicle.

The tire/rim assembly 10 has an output device 52. The output device 52 may be mounted to the tire 12 or may be mounted to the rim 14. The output device 52 may be incorporated into a tire pressure monitoring system (TPMS) for example. The output device 52 is electrically connected to the plural strain detecting bodies 22. Specifically, the output device 52 is electrically connected to the respective electrically-conductive rubbers 16 via the electrically-conductive portions 44 (see Fig. 2).

The electrically-conductive portions 44 may be electrically connected to the output device 52 via wires (not illustrated), or may be electrically connected to the output device 52 via the rim 14. Further, in a case in which the electrically-conductive portions 44 are electrically connected to the output device 52 via the rim 14, the output device 52 may be electrically connected to the rim 14 by being mounted to the rim 14 by screws (not illustrated) or the like.

In the example illustrated in Fig. 3, two of the strain detecting bodies 22 are provided at the tire 12, but the number of strain detecting bodies 22 that the tire 12 has may be any number. Hereinafter, description is given by using an example in which the two strain detecting bodies 22 are provided at the tire 12.

The output device 52 is a device having an electrical circuit (not illustrated) that outputs a first detection signal corresponding to an electrical characteristic of the first strain detecting body 22A that includes the pair of first electrically-conductive rubbers 16A, and a second detection signal corresponding to an electrical characteristic of the second strain detecting body 22B that includes the pair of second electrically-conductive rubbers 16B. Hereinafter, when there is no need to differentiate between the first detection signal and the second detection signal, the first detection signal and the second detection signal are called "detection signals".

The output device 52 and the estimating device 50 each have a communication circuit (not illustrated) and are connected so as to be able to communicate with one another through the communication circuits. The communication circuits may be circuits that communicate by wires, or may be circuits that communicate wirelessly. As an example, Fig. 3 illustrates an example in which the communication circuits are circuits that communicate wirelessly.

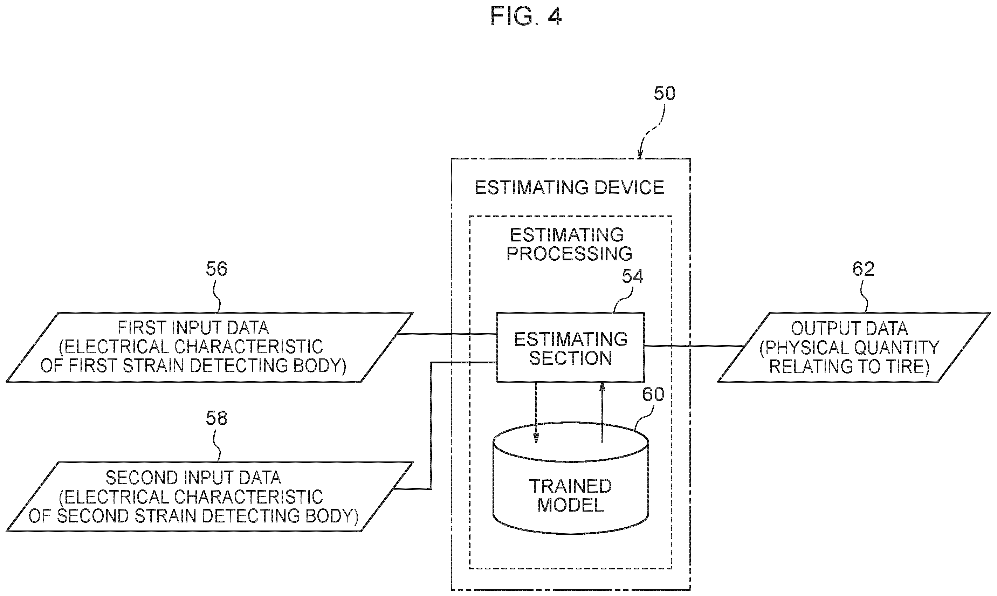

Functional structures of the estimating device 50 relating to the present embodiment are illustrated in Fig. 4. The estimating device 50 executes estimating processing. The estimating device 50 has an estimating section 54. The estimating processing is realized by the estimating section 54.

As an example, an electrical characteristic of the first strain detecting body 22A is inputted to the estimating section 54 as first input data 56, and an electrical characteristic of the second strain detecting body 22B is inputted to the estimating section 54 as second input data 58. By using a trained model 60 that has carried out deep learning and has been trained, the estimating section 54 estimates a physical quantity relating to the tire 12 that is the subject of estimation (i.e., the tire 12 that is unknown and that is the subject tire), and outputs the estimated physical quantity as output data 62.

The electrical resistance of the strain detecting body 22 for example is included as an electrical characteristic of the strain detecting body 22. Electrical characteristics other than the electrical resistance of the strain detecting body 22 may be included in the electrical characteristics of the strain detecting body 22. Examples of electrical characteristics other than electrical resistance are impedance and electrostatic capacity. Hereinafter, description is given by using the electrical resistance of the strain detecting body 22 as an example of the electrical characteristic of the strain detecting body 22. Note that, for convenience, the electrical characteristic of the strain detecting body 22 has the same meaning as the electrical characteristic of the electrically-conductive rubbers 16 included in the strain detecting body 22. Similarly, the electrical resistance of the strain detecting body 22 has the same meaning as the electrical resistance of the electrically-conductive rubbers 16 included in the strain detecting body 22.

In the example illustrated in Fig. 4, the electrical characteristics of the strain detecting bodies 22 are inputted to the estimating section 54. However, in addition to the electrical characteristics of the strain detecting bodies 22, measured values or detected values or the like relating to the tire 12 may be inputted to the estimating section 54. Further, in addition to the electrical characteristics of the strain detecting bodies 22, measured values or detected values or the like relating to the vehicle to which the tire 12 is mounted may be inputted to the estimating section 54. Further, in addition to the electrical resistances of the strain detecting bodies 22, electrical characteristics other than the electrical resistances of the strain detecting bodies 22 may be inputted to the estimating section 54.

Physical quantities relating to the tire 12 include, for example, the slip angle of the tire 12, the camber angle of the tire 12, the rotational speed of the tire 12, the load applied to the tire 12, and the lateral force applied to the tire 12. The physical quantity relating to the tire 12 may be only the slip angle, the camber angle, the rotational speed, the load or the lateral force, or may be one or plural physical quantities among the slip angle, the camber angle, the rotational speed, the load and the lateral force.

Further, the physical quantities relating to the tire 12 may include other physical quantities relating to the tire 12, in addition to the slip angle, the camber angle, the rotational speed, the load and the lateral force. Moreover, the physical quantity relating to the tire 12 may be a physical quantity other than those listed above, provided that it is a physical quantity relating to traveling of the tire 12. Further, in addition to physical quantities relating to the tire 12, the estimating section 54 may estimate other physical quantities (e.g., physical quantities relating to the vehicle).

The trained model 60 is a model that has been trained to derive a physical quantity relating to the tire 12 from an electrical characteristic of the first strain detecting body 22A and an electrical characteristic of the second strain detecting body 22B. The trained model 60 is, for example, a model specifying a trained neural network, and is expressed as a collection of information of the weights (i.e., strengths) of the connections between the nodes (i.e., neurons) structuring the neural network.

Note that the technique described in International Publication No. 2021/124992 for example can be used as the technique that is applied to the estimating processing using the trained model 60.

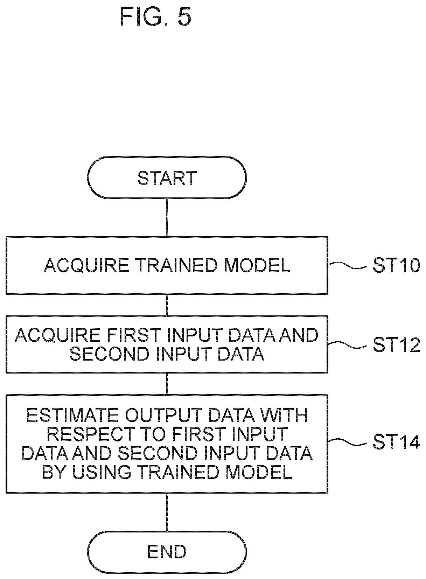

The flow of estimating processing relating to the present embodiment is illustrated in Fig. 5. The estimating method realized by the estimating processing is an example of the "estimating method" relating to the technique of the present disclosure. First, in step ST10, the estimating section 54 acquires the trained model 60 that is stored in the estimating device 50.

Next, in step ST12, the estimating section 54 acquires the first input data 56 and the second input data 58 from the unknown tire 12 that is the subject of estimation.

Next, in step ST14, by using the trained model 60 acquired in step ST10, the estimating section 54 estimates the output data 62 corresponding to the first input data 56 and the second input data 58 that were acquired in step ST12. A physical quantity, which relates to the tire 12 and corresponds to an electrical characteristic of the first strain detecting body 22A and an electrical characteristic of the second strain detecting body 22B, is thereby estimated.

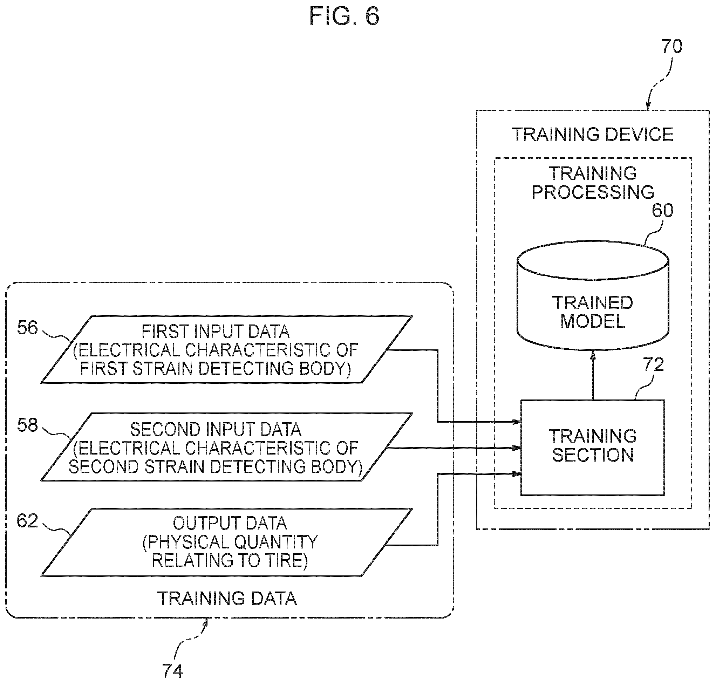

The functional structures of a training device 70 relating to the present embodiment are illustrated in Fig. 6. The training device 70 is a device that trains the trained model 60. The training device 70 may be realized by the estimating device 50 or may be a device separate from the estimating device 50. **In** a case in which the training device 70 is a device that is separate from the estimating device 50, the trained model 60 that has been trained by the training device 70 is provided from the training device 70 to the estimating device 50.

The training device 70 executes training processing. The training device 70 has a training section 72. The training processing is realized by the training section 72.

The trained model 60 is generated by the training processing. The trained model 60 is generated on the basis of training data 74 (i.e., teacher data) obtained from the tire 12 that is traveling under various, different conditions. The training data 74 is data including a large number of sets of the first input data 56 expressing an electrical characteristic of the first strain detecting body 22A, the second input data 58 expressing an electrical characteristic of the second strain detecting body 22B, and the output data 62 expressing a physical quantity relating to the tire 12.

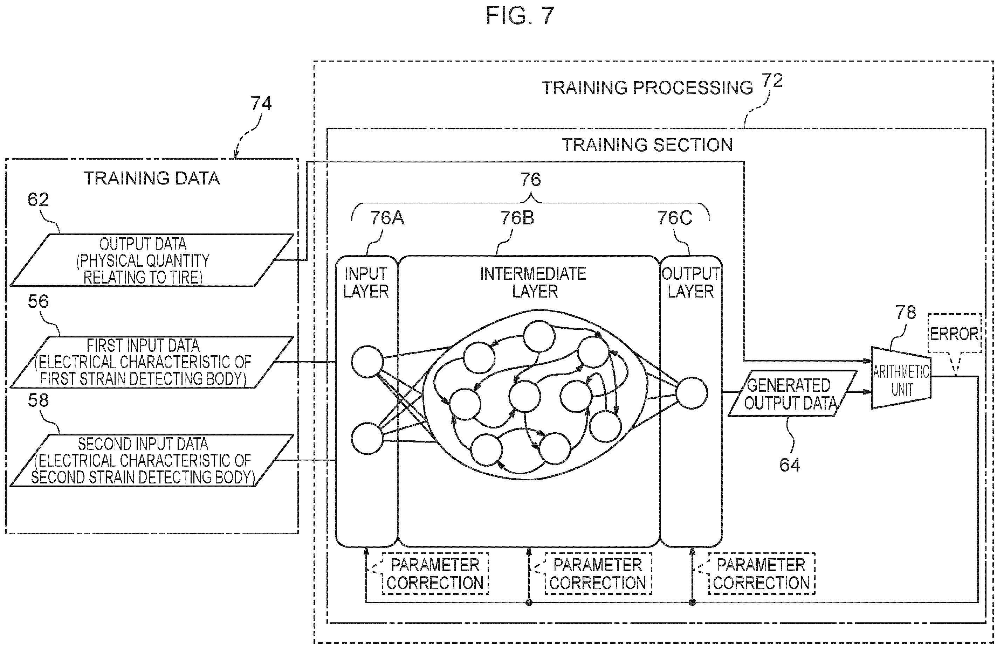

A mode of the training processing relating to the present embodiment is illustrated in Fig. 7. The training section 72 retains, as the training data 74, a large number of sets of the first input data 56 expressing an electrical characteristic of the first strain detecting body 22A, the second input data 58 expressing an electrical characteristic of the second strain detecting body 22B, and the output data 62 expressing a physical quantity relating to the tire 12.

The training section 72 includes a generator 76 and an arithmetic unit 78. The generator 76 includes an input layer 76A, an intermediate layer 76B and an output layer 76C, and is structured by a known recurrent neural network, e.g., a recurrent neural network (RNN).

Detailed explanation of the recurrent neural network itself is omitted as it is a known technique, but the intermediate layer 76B thereof includes a large number of node groups (i.e., neuron groups) having internode connections and feedback connections. Data from the input layer 76A is inputted to the intermediate layer 76B, and data expressing the results of computation at the intermediate layer 76B are outputted to the output layer 76C.

Specifically, the generator 76 is a neural network that generates generated output data 64 expressing a physical quantity relating to the tire 12, from the inputted first input data 56 and second input data 58. The generated output data 64 is data that estimates a physical quantity relating to the tire 12 from the first input data 56 and the second input data 58.

The generator 76 generates the generated output data 64 expressing a physical quantity relating to the tire 12, from the first input data 56 and the second input data 58. By training using a large amount of the first input data 56 and second input data 58, the generator 76 can generate the generated output data 64 that is close to the actually measured value of a physical quantity relating to the tire 12.

The arithmetic unit 78 is the arithmetic unit 78 that compares the generated output data 64 and the output data 62, and computes the error of the results of comparison. The generated output data 64 and the output data 62 are inputted to the arithmetic unit 78. The arithmetic unit 78 computes the error between the generated output data 64 and the output data 62, and outputs data expressing the results of computation.

On the basis of the error computed by the arithmetic unit 78, the training section 72 carries out training of the generator 76 that tunes the weighting parameters of the connections between the nodes. Specifically, the arithmetic unit 78 feeds-back, to the generator 76 and by using a technique such as, for example, gradient descent or error backpropagation, the weighting parameters of the connections between the nodes of the input layer 76A and the intermediate layer 76B at the generator 76, and the weighting parameters of the connections between the nodes within the intermediate layer 76B, and the weighting parameters of the connections between the nodes of the intermediate layer 76B and the output layer 76C, respectively.

Due thereto, all of the connections between the nodes are optimized such that the error between the generated output data 64 and the output data 62 is minimized, with the output data 62 of the training data 74 as the target. The trained model 60 is expressed as a collection of information of the weighting parameters (i.e., the weights or strengths) of the connections between the nodes that are the results of training by the training section 72.

Note that the example illustrated in Fig. 7 uses a recurrent neural network, but the technique of the present disclosure is not limited to use of a recurrent neural network, and another method may be used.

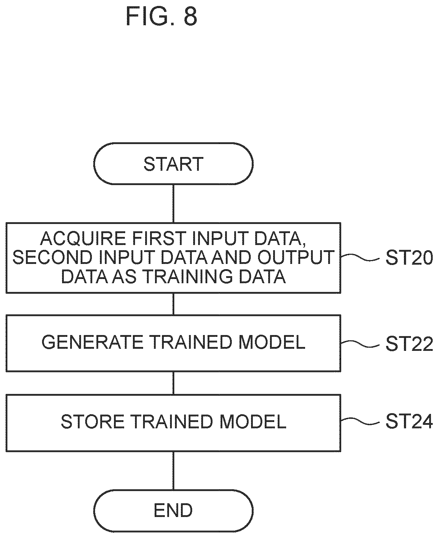

The flow of training processing relating to the present embodiment is illustrated in Fig. 8. The training method realized by the training processing is an example of the "training method" relating to the technique of the present disclosure. First, in step ST20, the training section 72 acquires the first input data 56, the second input data 58 and the output data 62 as the training data 74.

Next, in step ST22, the training section 72 generates the trained model 60 by using the training data 74. Namely, the training section 72 acquires information of the weighting parameters of the connections between the nodes that are the results of training using a large amount of the training data 74 as described above.

Next, in step ST24, the training section 72 stores the data, which is expressed as a collection of information of the weighting parameters (i.e., the weights or strengths) of the connections between the nodes that are the results of training, in the training device 70 as the trained model 60.

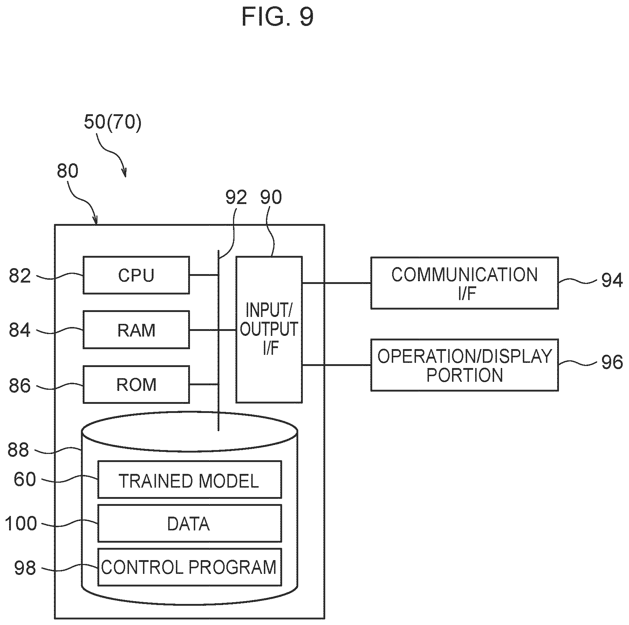

Hardware structures of the estimating device 50 relating to the present embodiment are illustrated in Fig. 9. The estimating device 50 has a computer 80. The computer 80 has a CPU 82, a RAM 84, a ROM 86, an auxiliary storage device 88 and an input/output I/F (Interface) 90. The auxiliary storage device 88 is structured by a hard disk device for example. The CPU 82 structures a processor, and the RAM 84 and the ROM 86 structure memories.

A control section is structured by the CPU 82, the RAM 84, the ROM 86, the auxiliary storage device 88 and the input/output I/F 90. The control section may be structured as a sub control section that controls some of the operations of the estimating device 50, or may be structured as a portion of a main control section that controls operations of the estimating device 50 on the whole.

For example, an LSI (Large Scale Integration) integrated circuit or an IC (Integrated Circuit) chip set may be used as a portion of or the entirety of each block of the control section. Further, at each of the aforementioned blocks, an individual circuit may be used, or a circuit integrating a portion or the entirety thereof may be used. Further, the aforementioned, respective blocks may be provided so as to be integral, or some of the blocks may be provided separately. Further, at each of the aforementioned blocks, a portion thereof may be provided separately. The integration of the control section is not limited to LSI, and a dedicated circuit or a general-purpose processor may be used.

The CPU 82, the RAM 84, the ROM 86, the auxiliary storage device 88 and the input/output I/F 90 are connected to one another via a bus 92 that can transmit and receive data and commands. Further, the estimating device 50 has a communication I/F 94 and an operation/display portion 96. The communication I/F 94 and the operation/display portion 96 are connected to the input/output I/F 90. The operation/display portion 96 includes, for example, a display, a keyboard and a mouse, or a touch panel display.

The communication I/F 94 functions as an input/output section for inputting and outputting at least one of the first input data 56, the second input data 58 and the output data 62 from and to external devices (not illustrated). Further, in a case in which the training device 70 is a device that is separate from the estimating device 50, the communication I/F 94 functions as an input/output section that inputs and outputs the trained model 60 from and to the training device 70.

A control program 98 is stored in the auxiliary storage device 88. The control program 98 is an example of the "program" relating to the technique of the present disclosure. The CPU 82 reads-out the control program 98 from the auxiliary storage device 88, and expands the control program 98 in the RAM 84, and executes various processings. The trained model 60 and various data 100 are stored in the auxiliary storage device 88.

At the estimating device 50, the CPU 82 functions as the estimating section 54 (see Fig. 4) by executing the control program 98. Further, in a case in which the estimating device 50 also serves as the training device 70, the CPU 82 functions as the training section 72 (see Fig. 6) by executing the control program 98.

Note that, in a case in which the training device 70 (see Fig. 6) and the estimating device 50 are separate devices, the training device 70 is realized by, for example, hardware structures that are similar to those of the estimating device 50.

Effects of the present embodiment are described next.

The tire 12 relating to the present disclosure has at least the electrically-conductive rubbers 16, and the electrically-conductive rubbers 16 have the contacting portions 42 that are provided at positions contacting the rim 14. Accordingly, for example, due to the contacting portions 42 and the output device 52 being electrically connected, strain detected at the electrically-conductive rubbers 16 can be outputted to the exterior by the output device 52. Namely, detection signals corresponding to the strain of the tire 12 can be outputted from the output device 52.

Further, the rim 14 has the electrically-conductive portions 44 that contact the contacting portions 42. Accordingly, for example, even if the contacting portions 42 and the output device 52 are not directly connected, the electrically-conductive rubbers 16 and the output device 52 can be electrically connected due to the electrically-conductive portions 44 and the output device 52 being connected.

Further, the contacting portions 42 are provided at the bead portions 30, and the electrically-conductive portions 44 are provided at the bead seat portions 34. Accordingly, the contacting portions 42 can be made to contact the electrically-conductive portions 44 due to the tire 12 being mounted to the rim 14. Due thereto, the work of assembling the tire/rim assembly 10 can be simplified as compared with a case that requires connection work for electrically connecting the electrically-conductive rubbers 16 and the output device 52 in addition to mounting the tire 12 to the rim 14.

Further, because the contacting portions 42 are provided at the bead portions 30, the contacting portions 42 can be pushed against the bead seat portions 34 in a state in which the tire 12 is mounted to the rim 14 for example. Due thereto, the contact resistance between the contacting portions 42 and the electrically-conductive portions 44 can be reduced.

Further, as an example of the plural structural portions of the tire 12, the tire 12 has the tread portion 24, the shoulder portions 26, the side portions 28 and the bead portions 30. The electrically-conductive rubbers 16 are provided so as to span over the tread portion 24, the shoulder portions 26, the side portions 28 and the bead portions 30. Accordingly, strain at regions that span over the tread portion 24, the shoulder portions 26, the side portions 28 and the bead portions 30 can be detected.

Further, because the electrically-conductive rubbers 16 are provided so as to span over the tread portion 24, the shoulder portions 26, the side portions 28 and the bead portions 30, strain over a wide region can be detected as compared with a case in which, for example, the electrically-conductive rubbers 16 are provided at only one structural portion among the tread portion 24, the shoulder portions 26, the side portions 28 and the bead portions 30.

Further, the electrically-conductive rubbers 16 have the axial direction portions 38 and the radial direction portions 40, and the axial direction portions 38 and the radial direction portions 40 are provided at the inner surface 12A of the tire 12. Accordingly, the axial direction portions 38 and the radial direction portions 40 contacting objects at the exterior of the tire 12 can be suppressed. Further, the tire 12 can be manufactured easily as compared with a case in which, for example, the electrically-conductive rubbers 16 are provided at the interiors of rubber materials of the tire 12 (i.e., a case in which the electrically-conductive rubbers 16 are embedded in rubber materials).

Further, the inner liner 32 is provided at the inner surface 12A of the tire 12, and the axial direction portions 38 and circumferential direction portions 46 are provided at the inner liner 32. Accordingly, the electrically-conductive rubbers 16 can be installed in the tire 12 by, for example, forming the electrically-conductive rubbers 16 integrally with the inner liner 32 or affixing the electrically-conductive rubbers 16 to the inner liner 32.

Further, the electrically-conductive rubbers 16 have the axial direction portions 38 that extend in the axial direction of the tire 12. Accordingly, detection signals corresponding to strain in the axial direction of the tire 12 can be outputted from the output device 52.

Further, the electrically-conductive rubbers 16 have the radial direction portions 40 that extend in the radial direction of the tire 12. Accordingly, detection signals corresponding to strain in the radial direction of the tire 12 can be outputted from the output device 52.

Further, the electrically-conductive rubbers 16 are formed in the shapes of sheets. Accordingly, detection signals corresponding to strain in the directions in which the electrically-conductive rubbers 16 extend can be outputted from the output device 52.

Further, the tire 12 has the plural electrically-conductive rubbers 16. Accordingly, detection signals that correspond to strain detected at plural regions corresponding to the plural electrically-conductive rubbers 16 can be outputted from the output device 52.

Further, the pair of first electrically-conductive rubbers 16A among the plural electrically-conductive rubbers 16 are disposed so as to be apart from one another in the axial direction of the tire 12, and the pair of first electrically-conductive rubbers 16A are electrically connected by the first connecting member 20A. Accordingly, even though the pair of first electrically-conductive rubbers 16A are disposed so as to be apart from one another in the axial direction of the tire 12, the first strain detecting body 22A can be formed by the pair of first electrically-conductive rubbers 16A and the first connecting member 20A.

Further, due to the first strain detecting body 22A being formed, the first detection signals that correspond to the strain detected at the regions corresponding to the pair of first electrically-conductive rubbers 16A (i.e., regions that are apart from one another in the axial direction of the tire 12) can be outputted from the output device 52.

Further, the pair of second electrically-conductive rubbers 16B among the plural electrically-conductive rubbers 16 are disposed so as to be apart from one another in the axial direction and the circumferential direction of the tire 12, and the pair of second electrically-conductive rubbers 16B are electrically connected by the second connecting member 20B. Accordingly, even though the pair of second electrically-conductive rubbers 16B are disposed so as to be apart from one another in the axial direction and the circumferential direction of the tire 12, the second strain detecting body 22B can be formed by the pair of second electrically-conductive rubbers 16B and the second connecting member 20B.

Further, due to the second strain detecting body 22B being formed, the second detection signals that correspond to the strain detected at the regions corresponding to the pair of second electrically-conductive rubbers 16B (i.e., regions that are apart from one another in the axial direction and the circumferential direction of the tire 12) can be outputted from the output device 52.

Further, the estimating device 50 has the estimating section 54. The estimating section 54 uses electrical characteristics of the electrically-conductive rubbers 16 that are provided at the tire 12 and physical quantities relating to the tire 12 as the training data 74. Further, the estimating section 54 estimates a physical quantity relating to the tire 12 that is the subject of estimation by inputting the electrical characteristics obtained from the tire 12 to the trained model 60 that has been trained such that the electrical characteristics of the electrically-conductive rubbers 16 are inputted thereto and so as to output the physical quantity relating to the tire 12. Accordingly, physical quantities relating to the tire 12 can be estimated even if the physical quantities relating to the tire 12 that is the subject of estimation are not measured directly.

Further, the estimating section 54 estimates a physical quantity relating to the tire 12 on the basis of the electrical resistances of the electrically-conductive rubbers 16 that serve as an example of the electrical characteristics of the electrically-conductive rubbers 16. Accordingly, by using electrical resistance that is correlated with physical quantities relating to the tire 12, physical quantities relating to the tire 12 can be estimated accurately as compared with, for example, a case of using an input value that is not correlated with physical quantities relating to the tire 12.

Further, the estimating section 54 estimates the slip angle, the camber angle, the rotational speed, the load and the lateral force of the tire 12 as examples of physical quantities relating to the tire 12. Accordingly, the slip angle, the camber angle, the rotational speed, the load and the lateral force of the tire 12 can be estimated even if the slip angle, the camber angle, the rotational speed, the load and the lateral force are not measured directly.

Modified examples of the present embodiment are described next.

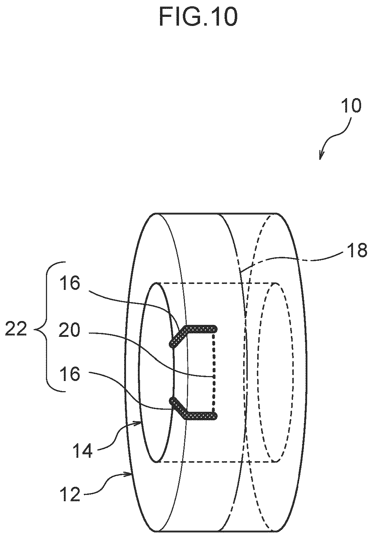

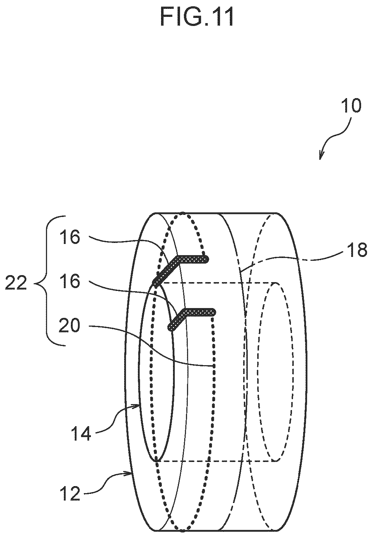

A first modified example through a fourth modified example relating to the strain detecting bodies 22 are illustrated in Fig. 10 through Fig. 13. As illustrated in Fig. 10 and Fig. 11, the pair of electrically-conductive rubbers 16 included in the strain detecting body 22 may be apart from one another in the circumferential direction of the tire 12.

Further, as illustrated in Fig. 10, the connecting member 20 may be provided between the pair of electrically-conductive rubbers 16, and connect the tire equatorial plane 18 side end portions of the pair of electrically-conductive rubbers 16 together. Or, as illustrated in Fig. 11, the connecting member 20 may be provided so as to take the long way around the circumferential direction of the tire 12 without passing between the pair of electrically-conductive rubbers 16, and connect the tire equatorial plane 18 side end portions of the pair of electrically-conductive rubbers 16 together.

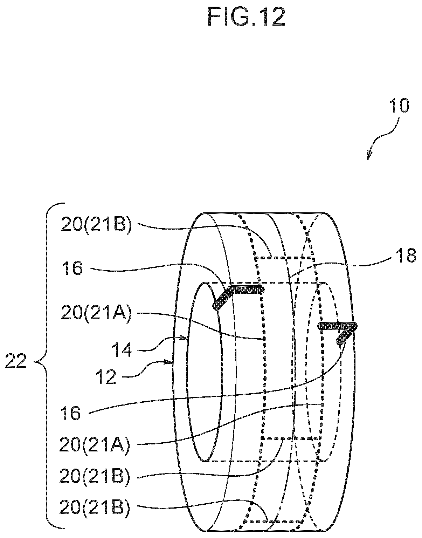

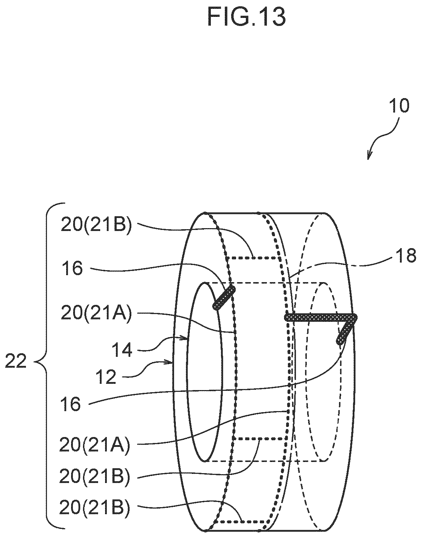

Further, as illustrated in Fig. 12 and Fig. 13, the strain detecting body 22 may have plural connecting members 20. Plural connecting members 21A, which extend in the circumferential direction of the tire 12 and connect the pair of electrically-conductive rubbers 16, and connecting members 21B, which extend in the axial direction of the tire 12 and connect the plural connecting members 21A, may be included in the plural connecting members 20.

Further, as illustrated in Fig. 13, one of the pair of electrically-conductive rubbers 16 included in the strain detecting body 22 may be a structure in which the axial direction portion 38 (see Fig. 2) is eliminated therefrom.

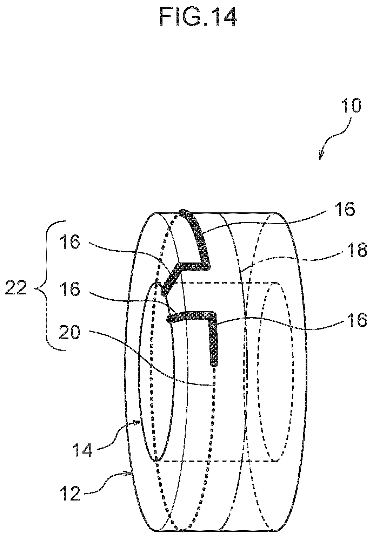

A fifth modified example relating to the strain detecting body 22 is illustrated in Fig. 14. As illustrated in Fig. 14, the electrically-conductive rubbers 16 may have the circumferential direction portions 46 extending in the circumferential direction of the tire 12. The circumferential direction portions 46 may be formed at any portion of the electrically-conductive rubbers 16. Further, the connecting member 20 may connect the circumferential direction portions 46 together. Due to the electrically-conductive rubbers 16 having the circumferential direction portions 46 in this way, detection signals corresponding to strain in the circumferential direction of the tire 12 can be outputted from the output device 52.

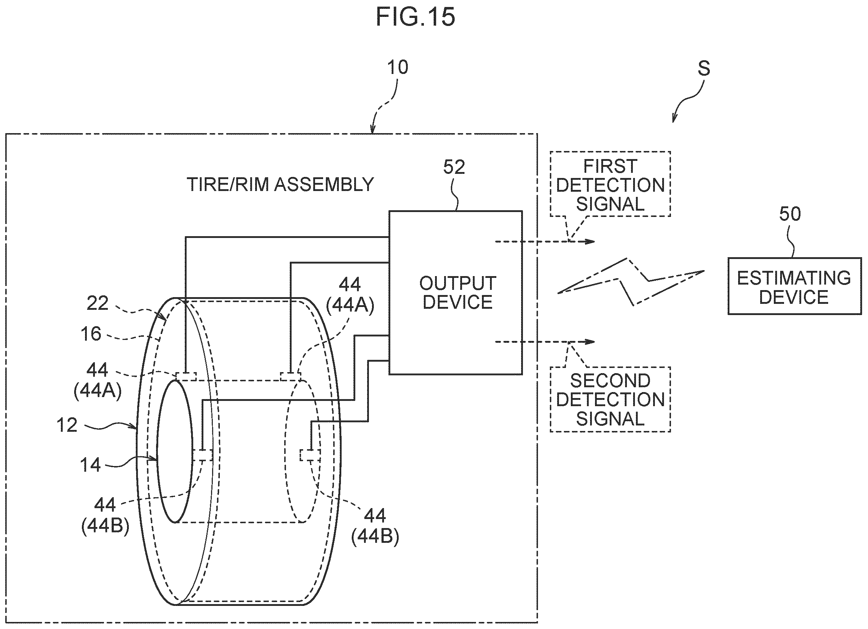

A sixth modified example relating to the strain detecting body 22 is illustrated in Fig. 15. As illustrated in Fig. 15, the strain detecting body 22 may have the electrically-conductive rubber 16 that is formed in an annular shape in the circumferential direction of the tire 12. Even if the electrically-conductive rubber 16 is formed in an annular shape in the circumferential direction in this way, detection signals corresponding to strain in the circumferential direction of the tire 12 can be outputted from the output device 52.

Further, as illustrated in Fig. 15, the rim 14 may have the plural electrically-conductive portions 44. The number of the plural electrically-conductive portions 44 may be any number. The plural electrically-conductive portions 44 may be disposed so as to be apart in at least one direction among the axial direction and the circumferential direction of the tire 12. The respective electrically-conductive portions 44 electrically connect the electrically-conductive rubber 16 and the output device 52.

In the sixth modified example, the plural electrically-conductive portions 44 include a pair of first electrically-conductive portions 44A disposed so as to be apart from one another in the axial direction of the tire 12, and a pair of second electrically-conductive portions 44B disposed so as to be apart from one another in the axial direction of the tire 12. The pair of first electrically-conductive portions 44A are disposed so as to be apart from the pair of second electrically-conductive portions 44B in the circumferential direction of the tire 12.

The output device 52 outputs a first detection signal corresponding to an electrical characteristic of the region between the pair of first electrically-conductive portions 44A at the tire 12, and a second detection signal corresponding to an electrical characteristic of the region between the pair of second electrically-conductive portions 44B at the tire 12. When the rim 14 has the plural electrically-conductive portions 44 with respect to the one electrically-conductive rubber 16 in this way, the strain of the regions between the electrically-conductive portions 44 at the tire 12 can be detected.

Further, in the above-described embodiment, the electrically-conductive rubbers 16 are provided so as to span over the tread portion 24, the shoulder portions 26, the side portions 28 and the bead portions 30. However, the electrically-conductive rubbers 16 do not have to be provided at any structural portion among the tread portion 24, the shoulder portions 26, the side portions 28 and the bead portions 30. Further, the tire 12 may have another structural portion other than the tread portion 24, the shoulder portions 26, the side portions 28 and the bead portions 30, and at least portions of the electrically-conductive rubbers 16 may be provided at the other structural portion.

Further, the electrically-conductive rubbers 16 may be provided at only one structural portion among the tread portion 24, the shoulder portions 26, the side portions 28 and the bead portions 30. Further, the tire 12 may have another structural portion other than the tread portion 24, the shoulder portions 26, the side portions 28 and the bead portions 30, and the electrically-conductive rubbers 16 may be provided only at the other structural portion. If the electrically-conductive rubbers 16 are provided only at one structural portion in this way, the structure of the tire 12 can be simplified as compared with a case in which the electrically-conductive rubbers 16 are provided so as to span over plural structural portions.

Further, in the above-described embodiment, the contacting portions 42 are provided at the bead portions 30, but may be provided at positions other than the bead portions 30 provided that they are at positions contacting the rim 14.

Further, in the above-described embodiment, the axial direction portions 38 and the radial direction portions 40 of the electrically-conductive rubbers 16 are provided at the inner surface 12A of the tire 12. However, the electrically-conductive rubbers 16 may have portions that are provided at the inner surface 12A of the tire 12, other than the axial direction portions 38 and the radial direction portions 40. Further, the portions, which are provided at the inner surface 12A of the tire 12, of the electrically-conductive rubbers 16 may be any form. Further, the entireties of the electrically-conductive rubbers 16 may be provided at the inner surface 12A of the tire 12.

Further, in the above-described embodiment, the axial direction portions 38 and the radial direction portions 40 of the electrically-conductive rubbers 16 are provided at the inner liner 32. However, the electrically-conductive rubbers 16 may have portions that are provided at the inner liner 32, other than the axial direction portions 38 and the radial direction portions 40. Further, the portions, which are provided at the inner liner 32, of the electrically-conductive rubbers 16 may be any form. Further, the entireties of the electrically-conductive rubbers 16 may be provided at the inner liner 32.

Further, the electrically-conductive rubbers 16 may be structures that have only the axial direction portion 38, or may be structures that have only the radial direction portion 40, or may be structures that have only the circumferential direction portion 46. Further, the electrically-conductive rubbers 16 may be structures that have at least any of the axial direction portion 38, the radial direction portion 40 and the circumferential direction portion 46. The electrically-conductive rubbers 16 may be structures having a portion other than the axial direction portion 38, the radial direction portion 40 and the circumferential direction portion 46.

Further, the shapes of the plural electrically-conductive rubbers 16 included at the tire 12 may be the same as one another or may differ from one another.

Further, although the electrically-conductive rubbers 16 are formed in the shapes of sheets in the above-described embodiment, the electrically-conductive rubbers 16 may be formed in shapes other than sheet shapes such as, for example, block shapes, rib shapes, convex shapes, or rail shapes.

Further, the tire 12 does not have to have the plural electrically-conductive rubbers 16, and may have only one electrically-conductive rubber 16.

Further, in a case in which the tire 12 has the plural electrically-conductive rubbers 16, the plural electrically-conductive rubbers 16 may be disposed so as to be apart from one another in at least one direction among the axial direction and the circumferential direction of the tire 12.

Further, the structure of the electrically-conductive rubbers 16 included in the strain detecting bodies 22 may be other than that described above. Moreover, the structure of the strain detecting bodies 22 may be other than that described above.

Further, the above embodiment describes that, in a case in which the electrically-conductive portions 44 are structured by members separate from the rim 14, the electrically-conductive portions 44 are formed in sheet shapes. However, the electrically-conductive portions 44 may be formed in shapes other than sheet shapes such as, for example, block shapes, rib shapes, convex shapes, or rail shapes.

Further, although the electrically-conductive portions 44 are provided at the bead seat portions 34, the electrically-conductive portions 44 may be provided at positions other than the bead seat portions 34, provided that they are positions of contacting the contacting portions 42.

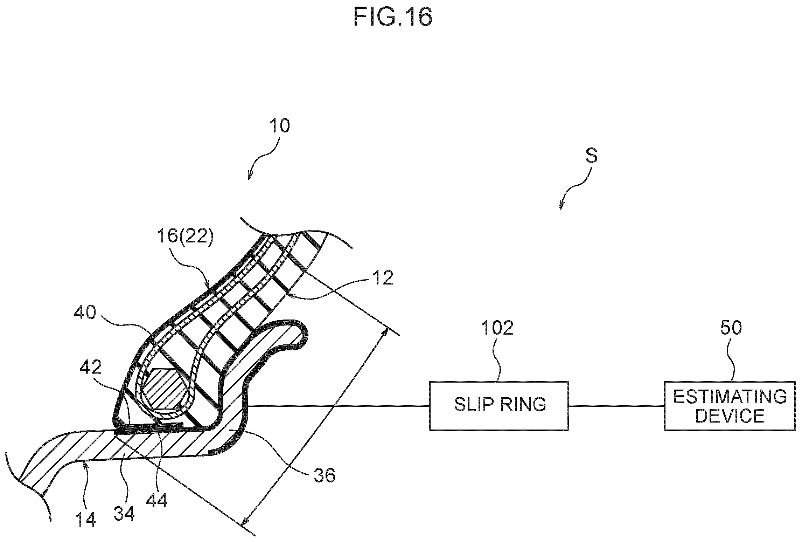

A seventh modified example relating to the tire/rim assembly 10 is illustrated in Fig. 16. In the seventh modified example, the electrically-conductive portion 44 is provided so as to span over the bead seat portion 34 and the flange portion 36. Further, the electrically-conductive portion 44 is electrically connected to the estimating device 50 via a slip ring 102. The estimating device 50 has an electrical circuit (not illustrated) that outputs detection signals corresponding to an electrical characteristic of the strain detecting body 22. Even if the tire/rim assembly 10 is structured in this way, a physical quantity relating to the tire 12 can be estimated by the estimating device 50 on the basis of electrical characteristics of the strain detecting bodies 22.

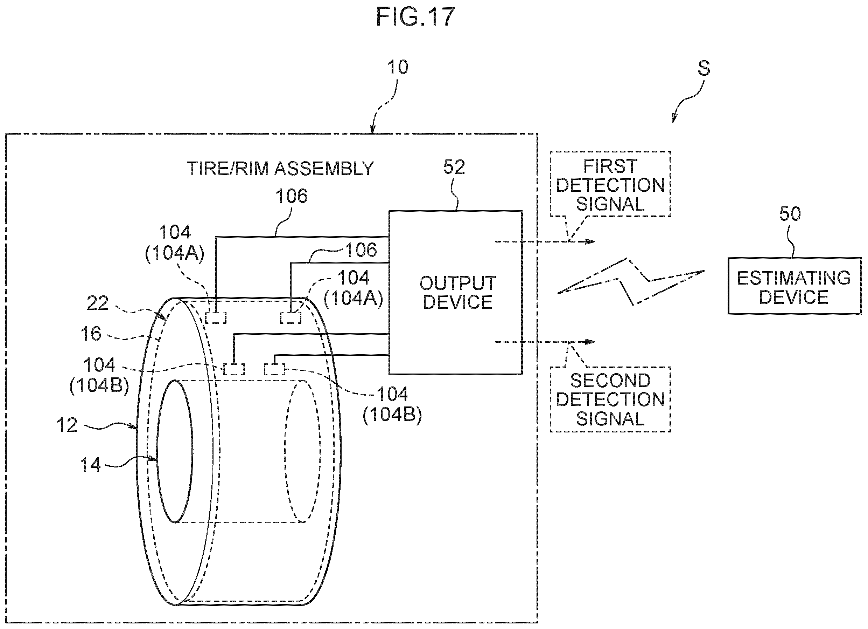

An eighth modified example relating to the tire/rim assembly 10 is illustrated in Fig. 17. **In** the eighth modified example, as an example, the electrically-conductive rubber 16 is formed in an annular shape in the circumferential direction of the tire 12.

The tire 12 has plural connecting portions 104. The connecting portions 104 are fixed to the electrically-conductive rubber 16. The connecting portions 104 may be adhesive materials that are electrically conductive, or may be affixed members that are electrical conductive and adhesive, or may be electrodes that are electrically conductive. The connecting portions 104 are electrically connected to the electrically-conductive rubber 16. The number of the plural connecting portions 104 may be any number. The plural connecting portions 104 may be disposed so as to be apart from one another in at least one direction among the axial direction and the circumferential direction of the tire 12. The respective connecting portions 104 are electrically connected to the output device 52 via wires 106 for example.

**In** the eighth modified example, the plural connecting portions 104 include a pair of first connecting portions 104A that are disposed so as to be apart from one another in the axial direction of the tire 12, and a pair of second connecting portions 104B that are disposed so as to be apart from one another in the axial direction of the tire 12. The pair of first connecting portions 104A are disposed so as to be apart from the pair of second connecting portions 104B in the circumferential direction of the tire 12. Further, the interval between the pair of first connecting portions 104A is set to be wider than the interval between the pair of second connecting portions 104B. The respective connecting portions 104 may be provided at any positions of the tire 12.

The output device 52 outputs a first detection signal corresponding to an electrical characteristic of the region between the pair of first connecting portions 104A at the tire 12, and a second detection signal corresponding to an electrical characteristic of the region between the pair of second connecting portions 104B at the tire 12. In this way, even if the rim 14 has the plural connecting portions 104 with respect to the one electrically-conductive rubber 16, strain of the regions between the connecting portions 104 at the tire 12 can be detected.

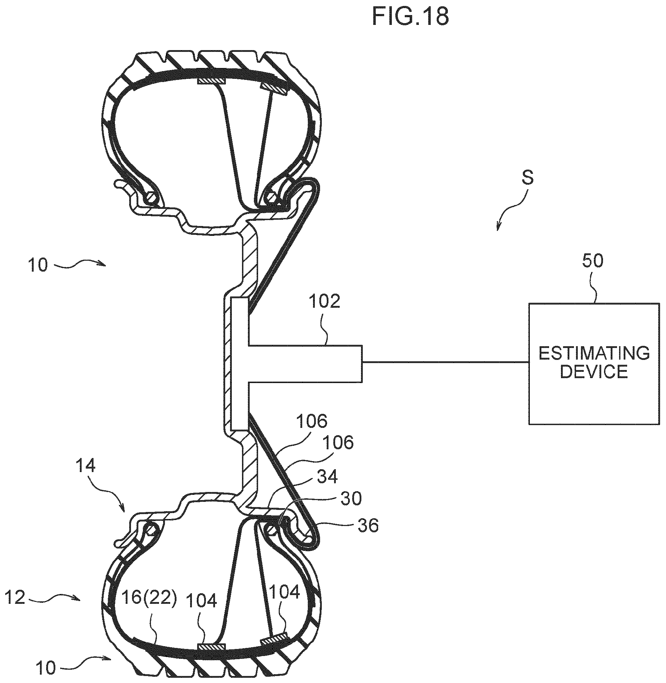

A ninth modified example relating to the tire/rim assembly 10 is illustrated in Fig. 18. The ninth modified example is a modified example with respect to the eighth modified example. In the ninth modified example, the wires 106 are led-out to the exterior of the tire 12 from between the bead portions 30 and the bead seat portions 34, and are connected to the slip ring 102. The connecting portions 104 are electrically connected to the estimating device 50 via the wires 106 and the slip ring 102. Even if the tire/rim assembly 10 is structured in this way, a physical quantity relating to the tire can be estimated by the estimating device 50 on the basis of an electrical characteristic of the strain detecting body 22.

Techniques that can be combined among the above-described, plural techniques may be implemented by being combined appropriately.

An Example of the present embodiment is described next.

The present Example is, for example, an example implemented by using the estimating system S illustrated in Fig. 17. **In** the present Example, the trained model 60 was trained by using the training data 74 that was obtained while the tire 12 was made to travel on a flat belt. Further, while the tire 12 that was the subject of estimation was made to travel on a flat belt, physical quantities relating to the tire 12 were estimated by using the trained model 60 and on the basis of electrical characteristics of the strain detecting bodies 22 obtained from the tire 12.

The number of the strain detecting bodies 22 was two, and the electrical characteristics of the strain detecting bodies 22 that were inputted to the estimating device 50 were the electrical resistances of the strain detecting bodies 22. Further, the physical quantities relating to the tire 12 that were outputted from the estimating device 50 were the slip angle, the camber angle, the rotational speed, the load and the lateral force.

The traveling conditions were as follows. Namely, the traveling speed of the tire 12 was made to be 10 km/h, 30 km/h and 60 km/h, and the loads on the tire 12 were made to be 3000 N, 5000 N and 7000 N. Further, the tire 12 was made to slalom with the slip angle of the tire 12 being 0°, 3° and 5°.

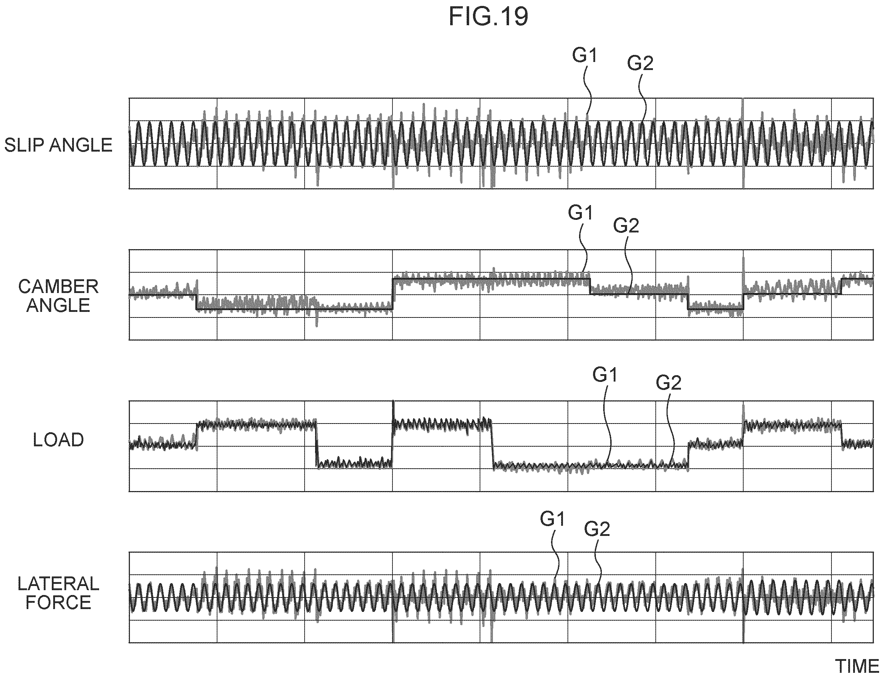

The results of estimation from the present Example are illustrated in Fig. 19. Graphed line G1 shown by the thick line shows the estimated values, and graphed line G2 shown by the thin line shows actually measured values. As demonstrated by the results of estimation that are illustrated in Fig. 19, in the present Example, estimated values corresponding to actually measured values were obtained.

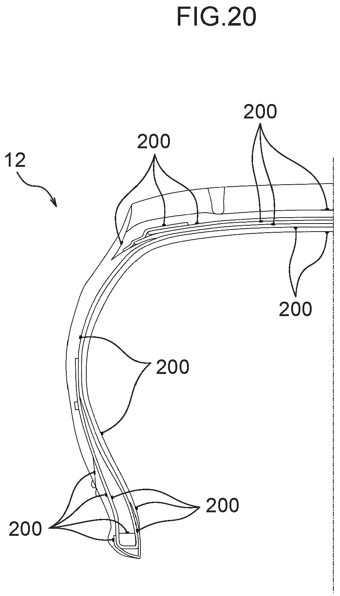

As illustrated in Fig. 20, the tire 12 relating to the present embodiment may have RF tags 200 serving as a communication device. The RF tags 200 have IC chips and antennas. For example, the RF tags 200 may be disposed so as to be nipped-in at positions between a plurality of the same type or different types of members structuring the tire. By structuring the tire in this way, it is easy to mount the RF tags 200 at the time of manufacturing the tire, and the mass producibility of tires having the RF tags 200 can be improved. In the present example, the RF tags 200 may be disposed, for example, so as to be nipped between the bead filler and another member that is adjacent to the bead filler.

The RF tags 200 may be embedded within any of the members structuring the tire. By structuring the tire in this way, the loads that are applied to the RF tags 200 can be reduced as compared with a case in which the RF tags are disposed so as to be nipped-in at positions between plural members structuring the tire. The durability of the RF tags 200 can thereby be improved. In the present example, the RF tags 200 may be embedded within rubber members such as the tread rubber or the side rubbers for example.

The RF tags 200 are preferably not disposed at positions that are borders between members of different rigidities in the peripheral length direction that is the direction running along the tire outer surface as seen in a cross-sectional view in the tire transverse direction. By doing so, the RF tags 200 are not disposed at positions at which it is easy for strain to concentrate based on differences in rigidities. Therefore, the loads applied to the RF tags 200 can be reduced. Due thereto, the durability of the RF tags 200 can be improved. In the present example, the RF tags 200 are preferably not disposed at positions that are the borders between, for example, the end portions of the carcass and members (e.g., the side rubbers) that are adjacent to these end portions of the carcass as seen in a cross-sectional view in the tire transverse direction.

The number of the RF tags 200 is not particularly limited. The tire may have only one RF tag 200, or may have two or more of the RF tags 200. Here, the RF tags 200 are exemplified as an example of the communication device, but the communication device may be different than the RF tags 200.

Although the present embodiment has been described above, the technique of the present disclosure is not limited to the above, and can, of course, be implemented by being modified in various ways other than the above within a scope that does not depart from the gist thereof.

All publications, patent applications, and technical standards mentioned in the present specification are incorporated by reference into the present specification to the same extent as if such individual publication, patent application, or technical standard was specifically and individually indicated to be incorporated by reference. Further, the disclosure of Japanese Patent Application No. 2022-185257 filed on November 18, 2022 is, in its entirety, incorporated by reference into the present specification.

Note that the following notes are disclosed in relation to the present embodiment.

### (Note 1)

A tire including at least an electrically-conductive rubber, wherein
the electrically-conductive rubber has a contacting portion provided at a position contacting a rim.

### (Note 2)

The tire of Note 1, wherein the contacting portion is provided at a bead portion.

### (Note 3)

The tire of Note 1 or Note 2 including plural structural portions, wherein
the electrically-conductive rubber is provided at at least one of the plural structural portions.

### (Note 4)

The tire of Note 3, wherein the plural structural portions include a tread portion, shoulder portions, side portions and bead portions.

### (Note 5)

The tire of Note 3 or Note 4, wherein the electrically-conductive rubber is provided so as to span over plural structural portions among the plural structural portions.

### (Note 6)

The tire of Note 3 or Note 4, wherein the electrically-conductive rubber is provided at one structural portion among the plural structural portions.

### (Note 7)

The tire of any one of Note 1 through Note 6, wherein at least a portion of the electrically-conductive rubber is provided at an inner surface of the tire.

### (Note 8)

The tire of any one of Note 1 through Note 6, wherein
an inner liner is provided at an inner surface of the tire, and
at least a portion of the electrically-conductive rubber is provided at the inner liner.

### (Note 9)

The tire of any one of Note 1 through Note 8, wherein the electrically-conductive rubber has an axial direction portion extending in an axial direction of the tire.

### (Note 10)

The tire of any one of Note 1 through Note 9, wherein the electrically-conductive rubber has a radial direction portion extending in a radial direction of the tire.

### (Note 11)

The tire of any one of Note 1 through Note 10, wherein the electrically-conductive rubber has a circumferential direction portion extending in a circumferential direction of the tire.

### (Note 12)

The tire of any one of Note 1 through Note 11, wherein the electrically-conductive rubber is formed in an annular shape in a circumferential direction of the tire.

### (Note 13)

The tire of any one of Note 1 through Note 12, wherein the electrically-conductive rubber is formed in a shape of a sheet.

### (Note 14)

The tire of any one of Note 1 through Note 13, including a plurality of the electrically-conductive rubbers.

### (Note 15)

The tire of Note 14, further including a connecting member that electrically connects the plural electrically-conductive rubbers.

### (Note 16)

The tire of Note 14 or Note 15, wherein the plural electrically-conductive rubbers are disposed so as to be apart from one another in at least one direction among an axial direction and a circumferential direction of the tire.

### (Note 17)

The tire of any one of Note 1 through Note 16, further including plural connecting portions that connect wires to the electrically-conductive rubber.

### (Note 18)

The tire of Note 17, wherein the plural connecting portions are disposed so as to be apart in at least one direction among an axial direction and a circumferential direction of the tire.

### (Note 19)

A tire/rim assembly including:
the tire of Note 1; and
the rim.

### (Note 20)

The tire/rim assembly of Note 19, wherein the rim has an electrically-conductive portion that contacts the contacting portion.

### (Note 21)

The tire/rim assembly of Note 20, wherein
the contacting portion is provided at a bead portion, and
the electrically-conductive portion is provided at a bead seat portion.

### (Note 22)

The tire/rim assembly of any one of Note 19 through Note 21, further including an output device electrically connected to the electrically-conductive rubber.

## Claims

1. An estimating device comprising an estimating section estimating a physical quantity relating to a subject tire that is a subject of estimation by inputting an electrical characteristic obtained from the subject tire to a trained model, which has been trained by using the electrical characteristic of an electrically-conductive rubber provided at a tire and the physical quantity relating to the tire as training data and such that the electrical characteristic is inputted to the trained model and the trained model outputs the physical quantity.

2. The estimating device of Claim 1, wherein the electrical characteristic includes electrical resistance of the electrically-conductive rubber.

3. The estimating device of Claim 1 or Claim 2, wherein the physical quantity is a physical quantity relating to traveling of the tire.

4. The estimating device any one of Claim 1 through Claim 3, wherein the physical quantity includes a slip angle of the tire.

5. The estimating device any one of Claim 1 through Claim 4, wherein the physical quantity includes a camber angle of the tire.

6. The estimating device any one of Claim 1 through Claim 5, wherein the physical quantity includes load applied to the tire.

7. The estimating device any one of Claim 1 through Claim 6, wherein the physical quantity includes lateral force applied to the tire.

8. The estimating device any one of Claim 1 through Claim 7, wherein the electrically-conductive rubber has a contacting portion provided at a position contacting a rim.

9. The estimating device of Claim 8, wherein the contacting portion is provided at a bead portion.

10. The estimating device of Claim 8 or Claim 9, wherein the rim has an electrically-conductive portion that contacts the contacting portion.

11. The estimating device of Claim 10, wherein the electrically-conductive portion is provided at a bead seat portion.

12. An estimating method comprising estimating a physical quantity relating to a subject tire that is a subject of estimation by inputting an electrical characteristic obtained from the subject tire to a trained model, which has been trained by using the electrical characteristic of an electrically-conductive rubber provided at a tire and the physical quantity relating to the tire as training data and such that the electrical characteristic is inputted to the trained model and the trained model outputs the physical quantity.

13. A program for causing a computer to execute a processing including estimating a physical quantity relating to a subject tire that is a subject of estimation by inputting an electrical characteristic obtained from the subject tire to a trained model, which has been trained by using the electrical characteristic of an electrically-conductive rubber provided at a tire and the physical quantity relating to the tire as training data and such that the electrical characteristic is inputted to the trained model and the trained model outputs the physical quantity.

14. A training device comprising a training section that generates a trained model, which is trained by using an electrical characteristic of an electrically-conductive rubber provided at a tire and a physical quantity relating to the tire as training data and such that the electrical characteristic is inputted to the trained model and the trained model outputs the physical quantity.
